# EUROPEAN PATENT SPECIFICATION

(11) **EP 0 880 889 B1**
(45) Date of publication and mention of the grant of the patent: **02.01.2003**
(21) Application number: 98201700.6
(22) Date of filing: 20.05.1998
(51) Int. Cl.: A01J 5/017

(54) **An implement for milking animals**
Vorrichtung zum Melken von Tieren
Dispositif pour la traite d'animaux

(30) Priority: 30.05.1997 NL 1006175
(43) Date of publication of application: 02.12.1998
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 565 189
- EP-A- 0 617 885
- WO-A-94/22292
- WO-A-96/01040

## Description

The invention relates to an implement for milking animals, such as cows, according to the preamble of claim 1.

Such an implement is known from the European patent application EP 0585189-A2. In this document a construction for automatically milking animals is described comprising a milking robot for connecting teat cups to the teats of the cow. The milking robot comprises an arm carrying two pairs of teat cups. Both pairs are pivotable around a vertical shaft on a corresponding carrier. The carriers are pivotably connected to the arm around vertical shafts. Using a detector and adjusting means, the teat cups can be placed in such a way that each teat cup is approximately under a relevant teat. By moving the robot arm upwards, the teat cups can be connected substantially simultaneously.

It is the object of the invention to provide an alternative implement for milking animals, with which, if the robot is out of order or needs maintenance, relevant activities can be carried out easily and quickly.

In accordance with the invention this object is obtained in that the implement as set forth in the opening paragraph comprises the features of the characterizing part of claim 1.

For the purpose of determining the position of the teats of an animal to be milked, the implement according to the invention comprises a detector, such as a laser or an ultrasonic sensor, for determining the position of the teats of the animal to be milked, which detector, during determining the position of the teats, can be positioned at some distance from the upper openings of the teat cups, said detector being disposed on a second robot arm which is capable of moving independently of the robot arm for the teat cups, said second robot arm comprising quick-coupling means, and said second robot arm for the detector can be detached quickly and preferably without making use of tools belonging to the other parts of the implement.

For the purpose of optimally determining the position of both the front and the rear teats, according to a further inventive feature, the second robot arm is disposed in the implement in such a manner that the detector can be moved to between the teat cups.

According to a further inventive feature, the implement is characterized in that each group of two teat cups is disposed on a respective carrier, in that the end of the robot arm comprises a box-shaped housing to which the carriers are fitted, said box-shaped housing comprises quick-coupling means and in that the box-shaped housing can be detached quickly and preferably without making use of tools belonging to the other parts of the implement.

For the purpose of positioning the teat cups after the position of the teats has been determined, according to another embodiment of the invention, the displacing means comprise cylinders or motors, such as e.g. stepper motors, by means of which a respective carrier can be moved in a horizontal plane and in height.

For the purpose of displacing the carrier in the horizontal plane, according to a further aspect of the invention, said carrier is pivotable about an upwardly extending axis.

In order to prevent the teat cups from falling from the teats during milking because of the fact that the animal moves in the milk box, the milking robot is provided with withdrawing members by means of which the teat cups can be pulled back to the carriers.

In accordance with a still further inventive feature, the implement comprises operating members, such as cylinders for displacing the robot arms, said operating members comprise quick-coupling means, and the operating members can be detached quickly and preferably without making use of tools belonging to the other parts of the implement.

According to a further inventive feature, the quick-coupling means comprise a locking pin and/or a locking spring and/or a split pin and/or a bayonet catch.

In order to prevent the teat cups from impeding the detector during determining the position of the teats, in accordance with the invention, the robot arm comprises displacing means with the aid of which the two groups of teat cups can be displaced in such a manner that, during determining the position of the teats of an animal to be milked, the upper openings of the teat cups are located beside the area covered by the detector.

According to a further inventive feature, during determining the position of the teats of an animal to be milked, the teat cups, viewed from above, are arranged in a V-shape. The area covered by the detector during determining the position of the teats of an animal to be milked is enclosed between the legs of this V-shaped arrangement.

In accordance with a further inventive feature, the milking parlour comprises a milk box.

For a better understanding of the invention, reference will now be made to an exemplary embodiment as shown in the accompanying drawings 1 to 3, in which:
Figure 1 is a plan view of an implement for milking animals, which implement is provided with a milking robot including a robot arm for connecting teat cups and a robot arm for the detector by means of which the position of the teats of an animal to be milked can be determined;
Figure 2 is an enlarged view of the robot arm, and
Figure 3 is a side view of the robot arms according to the view III - III in Figure 2.

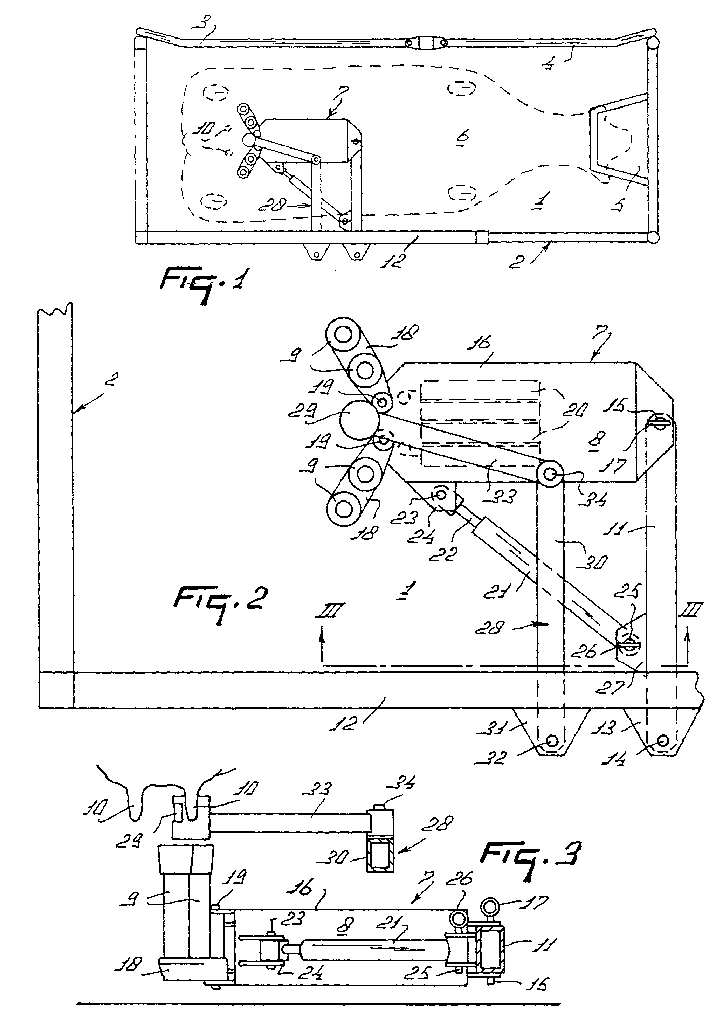

Figure 1 is a plan view of a milking parlour 1 comprising a milk box 2 which is provided with an entrance door 3 and an exit door 4. Near the front side of the milk box 2 there is disposed a feed trough 5 in which fodder, such as concentrate, can be fed to an animal 6 to be milked by means of a (non-shown) concentrate metering system. Near one longitudinal side of the milk box 2 there is disposed a milking robot 7 for automatically milking the animal 6. The milking robot 7 comprises a robot arm 8 for connecting teat cups 9 to the teats 10 of an animal to be milked (Figure 3). The robot arm 8 comprises a first arm 11 which is connected at one end with a frame beam 12 of the milk box 2 via a lug 13. By means of (non-shown) cylinders or stepper motors, the first arm 11 is pivotable about an upwardly extending axis 14 which is disposed on the lug 13. At the other end of the first arm 11 a box-shaped housing 16 is disposed hingeably about an upwardly extending axis 15. As shown in Figure 3, the upwardly extending axis 15 comprises a pin 17 which constitutes the hinge axis and which is designed so as to be simply detachable without tools being required.

Near the other end of the box-shaped housing 16 there are provided two elongated carriers 18 each carrying two teat cups 9. The teat cups 9 are disposed one behind the other on the carrier 18. By means of (non-shown) displacing means the carriers 18 can be pivoted about an upwardly extending axis 19. With the aid of (non-shown) connecting means, such as e.g. pneumatic cylinders, the teat cups 9 and/or the teat cup carriers 18 can be moved upwards, so that the teat cups 9 can be connected to the teats of an animal to be milked.

In the box-shaped housing 16 there are further provided four withdrawing members 20 by means of which the teat cups 9, after having been disconnected from the teat cup carriers 18, are pulled back to the carrier 18 via cables belonging to the withdrawing members.

For the purpose of pivoting the box-shaped housing 16 about the upwardly extending axis 15 relative to the first arm 11, a cylinder 21 is disposed between the box-shaped housing 16 and the first arm 11. The cylinder 21 may be designed as a hydraulic or pneumatic or electric cylinder which can be operated under the control of a (non-shown) computer. The cylinder 21 comprises a piston rod 22 whose end is connected with the box-shaped housing 16 via lugs 24 in such a manner that its end is hingeable about an upwardly extending axis 23. The other end of the cylinder 21 is connected with the first arm 11 so as to be hingeable about an upwardly extending axis 23. The other end of the cylinder 21 is connected with the first arm 11 so as to be hingeable about an upwardly extending axis 25. The upwardly extending axis 25 comprises a pin 26 which is passed through the rear housing of the cylinder 21 and through lugs 27 which are disposed on the first arm 11. The pin 26 can easily be removed without tools being required.

Besides the robot arm 8 of the teat cups the implement comprises a second robot arm 28 which is provided with a detector 29 for determining the position of the teats of the animal 6 to be milked. The second robot arm 28 comprises a first arm 30 which is fastened to the frame beam 12 of the milk box 2 by means of lugs 31. The lugs 31 of the second robot arm 28 are fastened, next to the lugs 13 of the robot arm 8, to the frame beam 12. The first arm 30 is capable of being pivoted by (non-shown) operating means about an upwardly extending axis 32 which is enclosed between the lugs 31. At the other end of the first arm 30 there is disposed a second arm 33 which is pivotable about an upwardly extending axis 34. By means of (non-shown) operating means, such as e.g. stepper motors, the second arm 33 can be rotated relative to the first arm 30 about the upwardly extending axis 34 under the control of the computer. The detector 29 for determining the position of the teats of an animal to be milked is disposed at the other end of the second arm 33. In the present embodiment, the detector comprises a laser.

The function of the above-described implement is as follows:

After the animal 6 has entered the milk box 2 via the entrance door 3, the animal is automatically identified by a (non-shown) animal identification system and in the feed trough 5 concentrate is fed to the animal. Subsequently the robot arm 8 for the teat cups is brought to under the animal. Then the carriers 18 are pivoted about the upwardly extending axes 19 by the (non-shown) operating means, the arrangement being such that they are disposed relative to each other in a V-shape and enclose an angle amounting to approximately 120°. Subsequently the second robot arm 28 including the detector 29 is positioned to beyond the upwardly extending axes 19 of the carriers 18 (Figure 2). By activating the detector 29, there is scanned an area extending between the upper openings of the teat cups 9 disposed on the two carriers 18. Consequently, the upper openings of the teat cups 9 are always located beside the area covered by the detector 29. In this manner, the detector 29 is not impeded by the teat cups 9. Subsequently, first the teat cups 9 are connected in pairs to the rear teats. This can be achieved by pivoting the teat cup carriers 18 about the upwardly extending axes 19 until the distance between the openings of the rear teat cups 9 equals the distance between the rear teat ends. Then, by means of the cylinder 21 and the (non-shown) operating means with the aid of which the first arm 11 is pivoted about the upwardly extending axis 14, the box-shaped housing 16 is activated in such a manner that the openings of the rear teat cups 9 are brought to under the rear teat ends 10. By subsequently lifting the teat cups with the aid of (non-shown) operating means, the two rear teat cups 9 are connected to the rear teats of an animal to be milked. Thereafter, the carriers 18 are moved downwards and the withdrawing members of the relevant teat cups 9 are activated at the same time, in such a manner that the teat cups 9 can be detached from the carrier 18. However, via cables of the withdrawing members 20, the teat cups 9 remain connected with the robot arm 8 for the teat cups. The two remaining teat cups 9 are connected to the two front teats in the same manner as described in the foregoing for the rear teat cups 9. If there has been established by (non-shown) means that an udder quarter has been milked out, by means of the withdrawing members 20, via the cable which is connected with the relevant teat cups 9, the teat cups 9 are disconnected from the teats and are pulled back to the carrier 18. This may also be the case when a teat cup is disconnected unexpectedly, e.g. by being kicked off by the animal. After having been milked, the animal 6 can leave the milking parlour 1 via the exit door 4 and a next animal can enter the milk box 2 in order to be milked.

## Claims

1. An implement for milking animals, such as cows, which implement comprises at least one milking parlour (1) provided with a milking robot (7) including a robot arm (8) for connecting teat cups (9) to the teats of an animal (6) to be milked, the milking robot (7) being arranged in such a manner that at least two groups of two teat cups (9) can be connected automatically and simultaneously to the teats of the animal (6) to be milked, **characterized in that** the robot arm (8) for the teat cups (9) comprises quick-coupling means with the aid of which the robot arm (8) for the teat cups (9) can be detached quickly and without making use of tools.

2. An implement for milking animals as claimed in claim 1, **characterized in that** the implement comprises a detector (29), such as a laser or an ultrasonic sensor, for determining the position of the teats (10) of the animal (6) to be milked, which detector (29), during determining the position of the teats (10), can be positioned at some distance from the upper openings of the teat cups (9), **in that** the detector (29) is disposed on a second robot arm (28) which is capable of moving independently of the robot arm (8) for the teat cups (9), said second robot arm comprises quick-coupling means, and **in that** the second robot arm (28) for the detector (29) can be detached quickly and preferably without making use of tools belonging to the other parts of the implement.

3. An implement as claimed in claim 2, **characterized in that** the second robot arm (28) is disposed in the implement in such a manner that the detector (29) can be moved to between the teat cups (9).

4. An implement for milking animals as claimed in claim 1, **characterized in that** each group of two teat cups (9) is disposed on a respective carrier (18), **in that** the end of the robot arm (8) comprises a box-shaped housing (16) to which the carriers (18) are fitted, said box-shaped housing comprising quick-coupling means and **in that** the box-shaped housing (16) can be detached quickly and preferably without making use of tools belonging to the other parts of the implement.

5. An implement as claimed in any one of the preceding claims, **characterized in that** the robot arm (8) comprises displacing means with the aid of which the two groups of teat cups (9) can be displaced in such a manner that, during determining the position of the teats (10) of an animal (6) to be milked, the upper openings of the teat cups (9) are located beside the area covered by the detector (29).

6. An implement as claimed in claim 5, **characterized in that** the displacing means comprise cylinders or motors, such as stepper motors, by means of which a respective carrier (18) can be moved in a horizontal plane and in height.

7. An implement as claimed in claim 6, **characterized in that** each carrier (18) is pivotable about an upwardly extending axis (19).

8. An implement as claimed in any one of the preceding claims, **characterized in that** the milking robot (7) is provided with withdrawing members (20) by means of which the teat cups (9) can be pulled back to the carriers (18).

9. An implement as claimed in any one of the preceding claims, **characterized in that** the implement comprises operating members, such as cylinders for displacing the robot arms, said operating members comprising quick-coupling means, and **in that** the operating members can be detached quickly and preferably without making use of tools belonging to the other parts of the implement.

10. An implement as claimed in claim 9, **characterized in that** the quick-coupling means (17; 20) comprise a locking pin and/or a locking spring and/or a split pin and/or a bayonet catch.

11. An implement as claimed in any one of the preceding claims, **characterized in that** during determining the position of the teats (10) of an animal to be milked, the teat cups (9), viewed from above, are arranged in a V-shape.

12. An implement as claimed in any one of the preceding claims, **characterized in that** the milking parlour (1) comprises a milk box (2).

## Patentansprüche

1. Vorrichtung zum Melken von Tieren, wie z. B. Kühen, wobei die Vorrichtung mindestens einen Melkstand (1) umfaßt, der einen Melkroboter (7) mit einem Roboterarm (8) zum Anschließen von Zitzenbechern (9) an die Zitzen eines zu melkenden Tieres (6) aufweist, wobei der Melkroboter (7) derart angeordnet ist, daß mindestens zwei Gruppen von zwei Zitzenbechern (9) automatisch und gleichzeitig an die Zitzen des zu melkenden Tieres (6) angeschlossen werden können,
**dadurch gekennzeichnet, daß** der Roboterarm (8) für die Zitzenbecher (9) Schnellkupplungsvorrichtungen umfaßt, mittels derer der Roboterarm (8) für die Zitzenbecher (9) schnell und ohne Einsatz von Werkzeugen gelöst werden kann.

2. Vorrichtung zum Melken von Tieren nach Anspruch 1,
**dadurch gekennzeichnet, daß** die Vorrichtung einen Detektor (29), wie z. B. einen Laser oder einen Ultraschallsensor, zum Ermitteln der Position der Zitzen (10) des zu melkenden Tieres (6) umfaßt, wobei der Detektor (29) während der Ermittlung der Position der Zitzen (10) in einiger Entfernung von den oberen Öffnungen der Zitzenbecher (9) positioniert werden kann, daß der Detektor (29) an einem zweiten Roboterarm (28) angeordnet ist, der sich unabhängig von dem Roboterarm (8) für die Zitzenbecher (9) bewegen kann, wobei der zweite Roboterarm Schnellkupplungsvorrichtungen umfaßt, und daß der zweite Roboterarm (28) für den Detektor (29) schnell und vorzugsweise ohne Einsatz von zu den anderen Teilen der Vorrichtung gehörenden Werkzeugen gelöst werden kann.

3. Vorrichtung nach Anspruch 2,
**dadurch gekennzeichnet, daß** der zweite Roboterarm (28) in der Vorrichtung derart angeordnet ist, daß der Detektor (29) zwischen die Zitzenbecher (9) bewegt werden kann.

4. Vorrichtung zum Melken von Tieren nach Anspruch 1,
**dadurch gekennzeichnet, daß** jede Gruppe von zwei Zitzenbechern (9) auf einem entsprechenden Träger (18) angeordnet ist, daß das Ende des Roboterarmes (8) ein kastenförmiges Gehäuse (16) umfaßt, an dem die Träger (18) befestigt sind, wobei das kastenförmige Gehäuse Schnellkupplungsvorrichtungen umfaßt, und daß das kastenförmige Gehäuse (16) schnell und vorzugsweise ohne Einsatz von zu den anderen Teilen der Vorrichtung gehörenden Werkzeugen gelöst werden kann.

5. Vorrichtung nach einem der vorhergehenden Ansprüche,
**dadurch gekennzeichnet, daß** der Roboterarm (8) Verlagerungsvorrichtungen umfaßt, mittels derer die beiden Gruppen von Zitzenbechern (9) derart verlagert werden können, daß während der Ermittlung der Position der Zitzen (10) eines zu melkenden Tieres (6) die oberen Öffnungen der Zitzenbecher (9) neben dem von dem Detektor (29) abgedeckten Bereich angeordnet sind.

6. Vorrichtung nach Anspruch 5,
**dadurch gekennzeichnet, daß** die verlagerungsvorrichtungen Zylinder oder Motoren, wie z. B. Schrittmotoren, umfassen, mittels derer ein jeweiliger Träger (18) in einer horizontalen Ebene und in der Höhe bewegt werden kann.

7. Vorrichtung nach Anspruch 6,
**dadurch gekennzeichnet, daß** jeder Träger (18) um eine aufwärts gerichtete Achse (19) schwenkbar ist.

8. Vorrichtung nach einem der vorhergehenden Ansprüche,
**dadurch gekennzeichnet, daß** der Melkroboter (7) mit Rückziehgliedern (20) versehen ist, mittels derer die Zitzenbecher (9) zu den Trägern (18) zurückgezogen werden können.

9. Vorrichtung nach einem der vorhergehenden Ansprüche,
**dadurch gekennzeichnet, daß** die Vorrichtung Betätigungsglieder, wie z. B. Zylinder zum Verlagern der Roboterarme, umfaßt, wobei die Betätigungsglieder schnellkupplungsvorrichtungen umfassen, und daß die Betätigungsglieder schnell und vorzugsweise ohne Einsatz von zu den anderen Teilen der Vorrichtung gehörenden Werkzeugen gelöst werden können.

10. Vorrichtung nach Anspruch 9,
**dadurch gekennzeichnet, daß** die Schnellkupplungsvorrichtungen (17; 20) einen Verriegelungsstift und/oder eine Verriegelungsfeder und/oder einen Splint und/oder einen Bajonettverschluß umfassen.

11. Vorrichtung nach einem der vorhergehenden Ansprüche,
**dadurch gekennzeichnet, daß** während der Ermittlung der Position der Zitzen (10) eines zu melkenden Tieres die Zitzenbecher (9) von oben betrachtet V-förmig angeordnet sind.

12. Vorrichtung nach einem der vorhergehenden Ansprüche,
**dadurch gekennzeichnet, daß** der Melkstand (1) eine Melkbox (2) umfaßt.

## Revendications

1. Dispositif pour la traite d'animaux, tels que des vaches, lequel dispositif comprend au moins un compartiment de traite (1) équipé d'un robot de traite (7) ayant un bras robotisé (8) pour relier des godets (9) de trayons aux trayons d'un animal (6) à traire, le robot de traite (7) étant agencé de telle manière qu'au moins deux groupes de deux godets (9) de trayons peuvent être reliés automatiquement et simultanément aux trayons de l'animal (6) à traire, **caractérisé en ce que** le bras robotisé (8) pour les godets (9) de trayons comprend des moyens de couplage rapide à l'aide desquels le bras robotisé (8) pour les godets (9) de trayons peut être détaché rapidement et sans utiliser d'outils.

2. Dispositif pour la traite d'animaux selon la revendication 1, **caractérisé en ce que** le dispositif comprend un détecteur (29), tel qu'un capteur laser ou ultrasonique, pour déterminer la position des trayons (10) de l'animal (6) à traire, lequel détecteur (29), pendant la détermination de la position des trayons (10), peut être positionné à une certaine distance des ouvertures supérieures des godets (9) de trayons, **en ce que** le détecteur (29) est agencé sur un deuxième bras robotisé (28) qui peut être déplacé indépendamment du bras robotisé (8) pour les godets (9) de trayons, ledit deuxième bras robotisé comprenant des moyens de couplage rapide, et **en ce que** le deuxième bras robotisé (28) pour le détecteur (29) peut être détaché rapidement et de préférence sans utiliser d'outils appartenant aux autres parties du dispositif.

3. Dispositif selon la revendication 2, **caractérisé en ce que** le deuxième bras robotisé (28) est agencé dans le dispositif de telle manière que le détecteur (29) peut être amené entre les godets (9) de trayons.

4. Dispositif pour la traite d'animaux selon la revendication 1, **caractérisé en ce que** chaque groupe de deux godets (9) de trayons est agencé sur un support (18) respectif, **en ce que** l'extrémité du bras robotisé (8) comprend un logement en forme de boîte (16) sur lequel sont adaptés les supports (18), ledit logement en forme de boîte comprenant des moyens de couplage rapide, et **en ce que** le logement en forme de boîte (16) peut être détaché rapidement et de préférence sans utiliser d'outils appartenant aux autres parties du dispositif.

5. Dispositif selon une des revendications précédentes, **caractérisé en ce que** le bras robotisé (8) comprend des moyens de déplacement à l'aide desquels les deux groupes de godets (9) de trayons peuvent être déplacés de telle manière que, pendant la détermination de la position des trayons (10) d'un animal (6) à traire, les ouvertures supérieures des godets (9) de trayons sont situées à côté de la zone couverte par le détecteur (29).

6. Dispositif selon la revendication 5, **caractérisé en ce que** les moyens de déplacement comprennent des cylindres ou des moteurs, tels que des moteurs pas-à-pas, au moyen desquels un support (18) respectif peut être déplacé dans un plan horizontal et en hauteur.

7. Dispositif selon la revendication 6, **caractérisé en ce que** chaque support (18) peut pivoter autour d'un axe (19) qui s'étend vers le haut.

8. Dispositif selon une des revendications précédentes, **caractérisé en ce que** le robot de traite (7) est équipé d'éléments de retrait (20) au moyen desquels les godets (9) de trayons peuvent être ramenées aux supports (18).

9. Dispositif selon une des revendications précédentes, **caractérisé en ce que** le dispositif comprend des éléments de fonctionnement, tels que des cylindres, pour déplacer les bras robotisés, lesdits éléments de fonctionnement comprenant des moyens de couplage rapide, et **en ce que** les éléments de fonctionnement peuvent être détachés rapidement et de préférence sans utiliser d'outils appartenant aux autres parties du dispositif.

10. Dispositif selon la revendication 9, **caractérisé en ce que** les moyens de couplage rapide (17 ; 20) comprennent une goupille de verrouillage et/ou un ressort de verrouillage et/ou une goupille fendue et/ou un verrouillage à baïonnette.

11. Dispositif selon une des revendications précédentes, **caractérisé en ce que**, pendant la détermination de la position des trayons (10) d'un animal à traire, les godets (9) de trayons, vus depuis le dessus, sont agencées en forme de V.

12. Dispositif selon une des revendications précédentes, **caractérisé en ce que** le compartiment de traite (1) comprend une boîte à lait (2).
